# EUROPEAN PATENT APPLICATION

(11) **EP 4 554 025 A1**
(43) Date of publication of application: **14.05.2025**
(21) Application number: 23208849.2
(22) Date of filing: 09.11.2023
(51) Int. Cl.: H02H 3/18, H02H 3/087

(54) **PROTECTIVE SWITCH ASSEMBLY, PROTECTIVE SWITCHING DEVICE, POWER SUPPLY SYSTEM AND APPARATUS COMPRISING SAME**

(71) Applicant: Airbus S.A.S., 31700 Blagnac (FR)
(72) Inventor: STEINER, Gerhard, 82024 Taufkirchen (DE); KAPAUN, Florian, 82024 Taufkirchen (DE)
(74) Representative: OTN Airbus SAS

(57) **Abstract**

A protective switch assembly (30) for protecting against and/or switching DC in an electric power supply system (1) for propelling an apparatus (2), in particular a vehicle, such as aircraft, a corresponding protective switching device (10), as power supply system (1) and an apparatus (2) are described, the protective switch assembly (30) comprising a first switching module (33) with at least one first switching element (37) configured to prevent a main current (I_{M}) from flowing between a first power source (11) and a first power drain (21) in a passive state (P) of the first switching element (37), and to allow the main current (I_{M}) to flow between the first power source (11) and the first power drain (21) in an active state (O) of the first switching element (37); a first bypass module (36) for bypassing the first switching module (33) by being configured to allow a bypass current (I_{B}) to flow from the first power source (11) to the first power drain (21); a measurement module (51) configured for measuring bypass currents (I_{B}) exceeding a certainty threshold (C) with a pre-defined measurement certainty; and a control module (52) configured to switch the first switching module (33) from the passive state (P) to the active state (O) when the bypass current (I_{B}) exceeds a predefined switching threshold (S); wherein the switching threshold (S) exceeds the certainty threshold (C) by a safety margin (M).

## Description

### Technical Field

The present disclosure relates to protective switching for preventing undue current flows between power sources and power drains in electric power supply systems. In particular, the present disclosure a protective switch assembly for protecting against and/or switching DC in an electric power supply system for propelling an apparatus, in particular a vehicle, such as aircraft, a protective switching device for a power supply system providing electric power to an apparatus, in particular a vehicle, such as an aircraft, a power supply system for electrically powering an apparatus, in particular a vehicle, such as an aircraft, an and apparatus, in particular a vehicle, such as an aircraft.

### Technical Background

Protective switches for power supply systems, respective assemblies, devices as well as apparatuses comprising the same are known from the prior art. The switches are commonly used for protecting power sources and/or power drains of the power supply systems from overload and/or undue current flows. Such an undue current flows may particularly involve reverse currents that have to be kept from flowing from the actual drain back to the source since the source cannot, or at least temporarily may not be able to receive the reverse current without being damaged, overheating, or alike.

FR 2 108 362 A, for example, relates to an electronic spatial system comprising: an electronic circuit that is sensitive to spatial radiation, comprising at least one signal input port and/or at least one signal output port; a signal processing unit; an electronic spatial radiation detection unit electrically connected to the signal processing unit; and at least one protective switch electrically connected between the electrical ground of the electronic spatial system and at least one out of the signal input or signal output ports of the sensitive electronic circuit, and controlled by the signal processing unit; said signal processing unit being configured to switch the at least one protective switch to the electrical ground upon detecting an amplitude of a signal that is representative of an amount of spatial radiation greater than a predefined radiation threshold.

EP 1 949 519 B1 refers to a device for controlling power transfer between two cores of a direct current network, said cores comprising source-charge interconnection nodes including protection and contact members. The aforementioned cores are placed in different zones of a power distribution system containing the direct current network. The invention is characterised in that it comprises: an electronic power converter including two switching cells which are interconnected by means of an inductor, each switching cell comprising two switches; and a module for controlling the converter, which transfers adjustable direct current power and stabilises the direct current voltage.

New DC power sources and networks require protection and advanced functionalities to fulfil the needs of the targeted applications, such as electric powering of all kinds of apparatuses, in particular vehicles, such as aircrafts, or alike. Today's switching and protection devices however show high tolerances / losses and reaction times. This causes problems if a very fast reaction is required. Diodes are often used for the reverse current protection and insurance of a unidirectional current flow direction. Unfortunately, this approach comes with quite high losses due to the diode forward voltage.

In view of the above, protective switches for power supply systems, respective assemblies, devices as well as apparatuses comprising the same as known from the prior art cannot fully satisfy protective needs on the one hand and power efficiency demands on the other hand.

### Summary

It may thus be seen as an object to provide an enhanced protective switching which satisfies both, protective needs, in particular with respect to reaction times, as well as power efficiency demands, i.e., the reduction of power losses. These objects are at least partly solved by the subject matter of the independent claims.

In particular, a protective switch assembly for protecting against and/or switching DC in an electric power supply system for propelling an apparatus, in particular a vehicle, such as aircraft, is provided, comprising a first switching module with at least one first switching element configured to prevent a main current from flowing between a first power source and a first power drain in a passive state of the first switching element, and to allow the main current to flow between the first power source and the first power drain in an active state of the first switching element; a first bypass module for bypassing the first switching module by being configured to allow a bypass current to flow from the first power source to the first power drain; a measurement module configured for measuring bypass currents exceeding a certainty threshold with a pre-defined measurement certainty; and a control module configured to switch the first switching module from the passive state to the active state when the bypass current exceeds a predefined switching threshold; wherein the switching threshold exceeds the certainty threshold by a safety margin.

A protective switching device for a power supply system providing electric power to an apparatus, in particular a vehicle, such as an aircraft, is provided, comprising at least one corresponding protective switch assembly.

A power supply system for electrically powering an apparatus, in particular a vehicle, such as an aircraft, is provided, comprising at least one corresponding protective switch assembly and/or at least one corresponding protective switching device.

An apparatus, such as a vehicle, in particular an aircraft, is provided, comprising a corresponding power supply system.

If a circuit of the power supply system provided with the protective switch assembly is loaded with small currents, the switching module is kept in the passive state, such as an OFF-state, as the current cannot be detected properly (offset currents of measurement principles). In this state, the bypass module conducts the current and can act like a "normal" diode. As the currents are low, the losses are neglectable. If the current exceeds a predefined value, the switch is turned on and therefore bypasses the bypass module. Due to its higher value, the current can now be detected fast and properly with a desired degree of certainty and/or accuracy while any offset can be neglected. The switching element may stay in the active state until the current decreases to or below the predefined switching threshold. At this point, the switching element is turned off again which leads to that current conduction is again being restricted to the bypass module.

Consequently, in the active state, any power loss due to a voltage drop, such as a forward voltage drop, at the bypass module can be minimised. Thus, the solution makes a reduction of the losses feasible by bypassing the first bypass module or a diode, by means of the first switching module e.g., with a solid-state switch. Solid state switches usually come with a control which is based on a current transducer, a shunt resistor, or further principles for current measurements. All protective principles show an offset due to measurement fundamentals. Therefore, higher current values are necessary if a reliable current flow direction detection is required. The detection time also is typically higher than the reverse recovery time of a diode. Hence, diodes are still the preferred solution to ensure unidirectional current flow.

The provided solution has the advantage over the prior art that fast protective switching is combined with a minimisation of losses. At the same time, the solution can be implemented in an easy as well as reliable ways. For example, if a solid-state switch is used as a part of the first switching element, unwanted reverse currents can be blocked very fast while allowing regular currents to flow with a minimal voltage drop and thus power loss.

Further developments can be derived from the dependent claims and from the following description. Features described with reference to the device features may be implemented as method steps, or vice versa. Therefore, the description provided in the context of the protective switch assembly applies in an analogous manner also to respective methods. In particular, the functions of the protective switch assembly and of its components may be implemented as steps of methods and the method steps may be implemented as functions of the protective switch assembly or vice versa.

According to an aspect of a protective switch assembly, the at least one first switching element is configured to allow the main current to flow from the first power source to the first power drain in the passive state. The first switching element may act like a diode allowing the main current to flow from the first power source to the first power drain in a forward direction and blocking the main current in a reverse direction. Since in the passive state, the main current and/or bypass current is rather low, any power losses due to voltage drop at the at least one first switching element are neglectable.

According to an aspect of a protective switch assembly, the at least one first switching element comprises at least one field-effect transistor having a source terminal connected to the power source and a drain terminal connected to the power drain. Field-effect transistors (FET) constitute a reliable and efficient means for protecting against unwanted currents and provide fast as well as reliable switching while minimising power losses. The control of solid-state switches can be optimised in that they are operated as an "active" diode. FET based solid state switches also allow current flow from source to drain if they are in the OFF state (in terms of a body diode).

Therefore, FETs are suited to be used as an "active diode". If the semiconductor switch of the FET is in the ON state, the voltage drop of the body diode is bypassed by the semiconductor switch. With this approach, the forward current losses of the design - especially at high currents - can be reduced a lot compared to diode losses. The provided solution thus allows for replacing unidirectional diodes by solid state switches. This helps in drastically reducing losses and therefore minimize cooling effort and increase overall efficiency. A main focus of implementations of the provided solution can be put on control schemes that enable very fast reactions and, in addition, overcome mentioned offset-current measurement issues of prior art solid state switches.

According to an aspect of a protective switch assembly, the at least one field-effect transistor has a gate terminal connected to the control module, and wherein the control module is configured to apply a gate voltage to the gate terminal for controlling whether the at least one first switching element is in the active state or in the passive state. By using the gate voltage for controlling the switching state of the at least one first switching element, controlling the protective switch assembly is facilitated. This allows for a very accurate and fast control of the protective switch assembly.

According to an aspect of a protective switch assembly, the first bypass module is configured to allow the bypass current to flow from the first power source to the first power drain. During the ON-state of the first switching module, the overall losses are low due to the highly optimized semiconductor switch that bypasses the body-diode. For the OFF-state, low losses are achieved due to the low current values. Additionally, the current direction is predetermined by the diode and does not have to be detected properly.

According to an aspect of a protective switch assembly, the first bypass module comprises a directionally selective element allowing the bypass current to flow from the first power source to the first power drain and preventing the bypass current to flow from the first power drain to the first power source. The directionally selective element can be provided by the body diode of the FET. Thereby, the FET can fulfil the double function in that it can provide the at least one first switching element and the directionally selective element.

According to an aspect of a protective switch assembly, the directionally selective element comprises at least one diode allowing the bypass current to flow as a forward current from the first power source to the first power drain and preventing the bypass current to flow as a reverse current from the first power drain to the first power source. Hence, a current direction does not have to be detected as the diode, for example the body diode of the FET, can only conduct in one direction. Thus, the bypass module can remain completely passive.

According to an aspect of a protective switch assembly, the protective switch assembly further comprises a second switching module with at least one second switching element configured to prevent a main current from flowing between a second power source and a second power drain in a passive state of the second switching element, and to allow the main current to flow between the second power source and the second power drain in an active state of the at least one second switching element; and a second bypass module for bypassing the second switching module by being configured to allow a bypass current to flow from the second power source to the second power drain; wherein the control module is configured to switch the second switching module from the passive state to the active state when the bypass current exceeds the predefined switching threshold. The first power source and the second power source may be arranged in a common source configuration. By having at least one first and at least one second switching module, a protective switch assembly as proposed allows for integrating multiple power sources and/or power drains into a power supply system.

According to an aspect of a protective switch assembly, the first switching module and/or the second switching module are or is, respectively, configured to prevent the main current from flowing between the first power drain and the second power drain in the passive state of the at least one first switching element and/or the at least one second switching element, respectively, and/or allow the main current to flow between the first power drain and the second power drain in the active state of the at least one first switching element and/or the at least one second switching element, respectively. Thereby, the first switching module and/or the second switching module can help in on the one hand, to prevent undue current flows between the power drains, while on the other hand allowing to enable current flows between the power drains if they are required or desired. This further helps in enhancing versatility of a protective switch assembly.

According to an aspect of a protective switch assembly, the first bypass module is configured to prevent the bypass current to flow from the first power drain to the second power drain and/or the second bypass module is configured to prevent the bypass current to flow from the second power drain to the first power drain. Consequently, the first bypass module and/or the second bypass module can help as well to prevent undue current flows between the power drains. This further helps in enhancing safety of a protective switch assembly.

According to an aspect of a protective switch assembly, the certainty threshold and/or the safety margin are or is, respectively, reflected by a certain percentage of a nominal current of the protective switch assembly. For example, if a nominal current of the protective switch assembly is 1 kA, due to respective accuracies of the measurement chain amounting to e.g., 1% of the nominal current, the resolution of currents to be accurately detected by means of the measurement module may be 10 A. In other words, for currents below 10 A, neither their amount, nor their direction may be accurately detected. The safety margin may be chosen to amount to e.g., 0.5 % of the nominal current, such that it amounts to 5 A. In this example, the switching threshold may thus amount to 15 A. Thereby, safe and reliable switching is provided.

According to an aspect of the power supply system, at least one power source connected to the protective switch assembly may comprise a fuel cell and/or a battery, and/or at least one power drain connected to the protective switch assembly may comprise a propulsion system for propelling the apparatus. Furthermore, another power drain may comprise any kind of computing system, control system and special payload, such as a sensory system, or alike. Thereby, the power supply system can be used for powering an apparatus in a versatile manner.

### Brief Description of the Drawings

The subject matter will hereinafter be described in conjunction with the following drawing figures, wherein like numerals denote like elements, and wherein:
Fig. 1 is a schematic representation of a power supply system with a protective switching device and apparatuses comprising the power supply system.
Fig. 2 is a schematic representation of the protective switching device comprising a protective switch assembly.
Fig. 3 is a schematic representation of a diagram illustrating switching states of the protective switch assembly.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

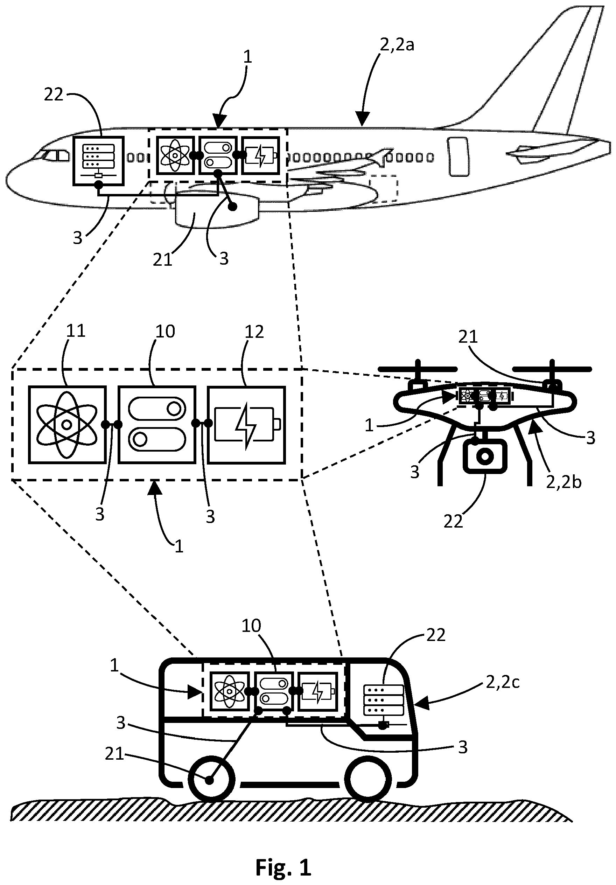

Fig. 1 shows a schematic representation of a power supply system 1 of an apparatus 2. The power supply system 1 is connected to the apparatus 2 by means of a respective line 3, such as a power supply line or any other kind of connection that allows for transferring power, in particular electrical power, and/or information between the power supply system 1 and the apparatus 2. The apparatus 2 may be provided in in the form of a vehicle, such as an aircraft 2a, an unmanned aerial vehicle (UAV) 2b, and/or a ground vehicle 2c or may take the form of any other mobile or stationary device, such as a water vessel, satellite, ground station, building, facility, or alike.

The power supply system 1 comprises a protective switching device 10, first power source 11 and/or a second power source 12, connected to the protective switching device 10 via respective lines 3. The first power source 11 may, for example, be a fuel cell system. The second power source 12 may be a rechargeable battery system. The apparatus 2 comprises a first power drain 21 and/or a second power drain 22 which can be connected to respective power consumers of the apparatus.

The first power drain 21 may be connected to a power consumer provided in the form of a propulsion system for propelling the apparatus 2. For example, in the aircraft 2a, the first power drain 21 may take the form of at least one electric motor driving a propeller, or alike. In the UAV 2b, the first power drain 21 may be a set of electric motors for driving rotary wings or alike. On the ground vehicle 2c, the first power drain 21 may comprise an electric motor for driving the wheels or any kind of power transmission system for driving the ground vehicle 2c.

The second power drain 22 may be connected to a power consumer provided in the form of a computing system, such as a control system for the apparatus 2. For example, in the aircraft 2a, the second power drain 22 may take the form of at least one electric supply for any kind of auxiliary system such as electric components of computers, controls, air conditioning, or alike. In the UAV 2b, the second power drain 22 may be a payload, such as a sensor system, for example cameras, or alike. On the ground vehicle 2c, the second power drain 22 may again comprise take the form of at least one electric supply for any kind of auxiliary system such as electric components of computers, controls, air conditioning, or alike.

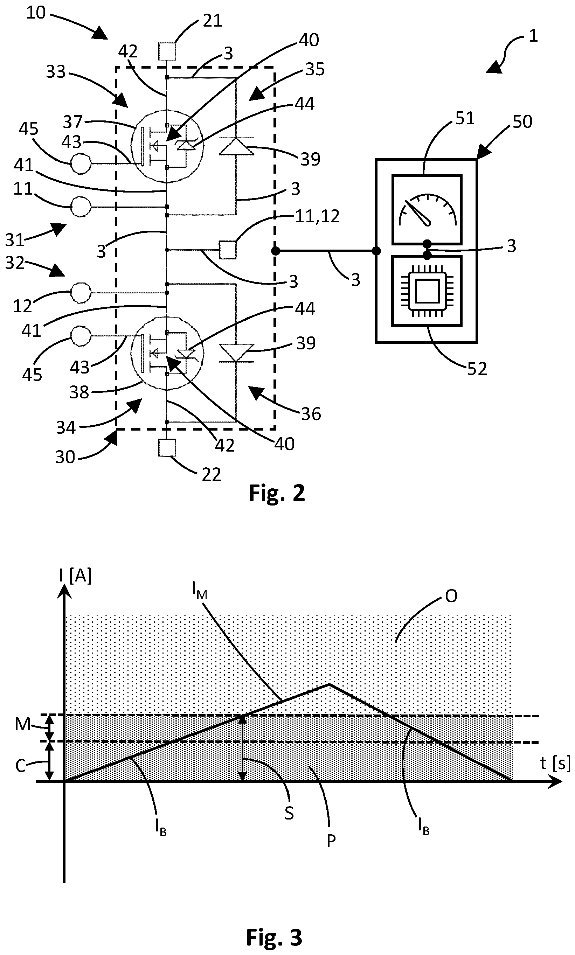

Fig. 2 shows a schematic representation of the protective switching device 10 of the power supply system 1 comprising a protective switch assembly 30. The protective switch assembly 30 has a first switch unit 31 connected to the first power source 11 as well as to the first power drain 21, and a second switch unit 32 connected to the second power source 12 as well as to the second power drain 22. The first power source 11 and the second power source 12 may be combined such that they are provided in the common source configuration, for example, with the first switch unit 31 and the second switch unit 32 acting in a bidirectional manner.

The first switching unit 31 comprises a first switching module 33. The second switch unit 32 comprises a second switching module 34. Furthermore, the first switching unit 31 comprises a first bypass module 35. The second switching unit 32 comprises a second bypass module 36. The first switching module 33 and the second switching module 34 comprise a first switching element 37 and a second switching element 38, respectively. The first bypass module 35 and the second bypass module 36 comprise a directionally selective element 39, for example, in the form of at least one diode.

The first switching element 37 and the second switching element 38 each comprise at least one field-effect transistor 40 having a source terminal 41, a drain terminal 42, a gate terminal 43 and a body diode 44. The source terminals 41 of the first switching element 37 and/or the second switching element 38 are connected to the first power source 11 and/or the second power source 12, respectively, e.g., to corresponding power terminals. The drain terminals 42 of the first switching element 37 and/or the second switching element 38 are connected to the first power drain 21 and/or the second power drain 22, respectively. The gate terminals 43 are connected to control inputs 45 for selectively applying a control voltage to the first switching element 37 and the second switching element 38, respectively, in particular the field-effect transistors 40 thereof.

Furthermore, the protective switching device 10 is provided with a control unit 50 comprising a measurement module 51 and a control module 52 connected to each other while at least one respective line 3. The measurement module 51 is configured to measure any voltages and/or currents occurring in lines 3 or terminals of the protective switching device 10, in particular the protective switch assembly 30 thereof. The control module 51 is configured to control any of the functions of the protective switching device 10 and/or power sources 11, 12, and/or power drains 21,22, connected thereto, e.g., based on voltages and/or currents measured by the measurement module 51 and/or based on any external control signals (not shown). The control unit 50 is connected to the protective switch assembly 30 via at least one respective line 3. This connection can involve that the control module 52 is directly and/or indirectly connected to the control inputs 45 for controlling the switching state of the first switching element 37 and/or the second switching element 38.

Fig. 3 shows a schematic representation of a diagram illustrating switching states of the protective switch assembly 30. In the present example, the first switching element 37 is configured to prevent a main current I_{M} from flowing between the first power source 11 and the first power drain 21 in a passive state P of the first switching element 37. For example, this is achieved in that any main current I_{M} is prevented from flowing from the first power source 11 to the first power drain 21 in that it constitutes a reverse current for the directionally selective element 39 and/or the body diode 44 which therefore block the main current I_{M}. The first switching module 33 is further configured to allow the main current I_{M} to flow between the first power source 11 and the first power drain 21 in an active state O of the first switching element 37.

The first bypass module 35 bypasses the first switching module 33 by being configured to allow a bypass current I_{B} to flow from the first power source 11 to the first power drain 21. For example, this is achieved in that respective lines 3 of the first bypass module 35 connect the directionally selective element 39 directly and/or indirectly to the source terminal 41 and the drain terminal 42 of the field-effect transistor 40.

The measurement module 51 is configured for measuring the bypass current I_{B} exceeding a certainty threshold C with a pre-defined measurement certainty. The control module is configured to switch the first switching module 33 from the passive state P to the active state O when the bypass current I_{B} exceeds a predefined switching threshold S. The switching threshold S exceeds the certainty threshold C by a safety margin M.

In an analogous manner, the second switching module 34 with the at least one second switching element 38 is configured to prevent the main current I_{M} from flowing between a second power source 12 and a second power drain 22 in the passive state P of the second switching element 38, and to allow the main current I_{M} to flow between the second power source 12 and the second power drain 22 in the active state O of the at least one second switching element 38. The second bypass module 36 bypasses the second switching module 34 by allowing the bypass current I_{B} to flow from the second power source 12 to the second power drain 22. The control module 52 is configured to switch the second switching module 33 from the passive state P to the active state O when the bypass current I_{B} exceeds the predefined switching threshold S.

Hence, as illustrated in Fig. 3, a current I and/or voltage U measurement between the first power source 11, the second power source 12, the first power drain 21 and/or the second power drain 22 along time t may first be in the region of the certainty threshold C, where the protective switch assembly 30 remains in the passive state P. The current I may then flow as the bypass current I_{B}. When then the current I exceeds the certainty threshold C, the protective switch assembly 30 still remains in the passive state P (OFF) while the current I remains within the safety margin M. Only, when the current I exceeds the switching threshold S, the protective switch assembly 30 is put into the active state A (ON) where the current I may then flow as the main current I_{M}. As soon as the current I drops below the switching threshold S, the protective switch assembly 30 is put back into the passive state P.

### List of Reference Signs

- 1: power supply system
- 2: apparatus / vehicle
- 2a: vehicle / aircraft
- 2b: vehicle / UAV
- 2c: vehicle / ground vehicle
- 3: line / connection

- 10: protective switching device
- 11: first power source
- 12: second power source

- 21: first power drain
- 22: second power drain

- 30: protective switch assembly
- 31: first switch unit
- 32: second switch unit
- 33: first switching module
- 34: second switching module
- 35: first bypass module
- 36: second bypass module
- 37: first switching element
- 38: second switching element
- 39: directionally selective element
- 40: field-effect transistor
- 41: source terminal
- 42: drain terminal
- 43: gate terminal
- 44: body diode
- 45: control input

- 50: control unit
- 51: measurement module
- 52: control module

- t: Time

- C: certainty threshold
- I: Current
- I_{B}: bypass current
- I_{M}: main current
- M: safety margin
- O: active state
- P: passive state
- S: switching threshold
- V: Voltage

## Claims

1. Protective switch assembly (30) for protecting against and/or switching DC in an electric power supply system (1) for propelling an apparatus (2), in particular a vehicle, such as aircraft, comprising
a first switching module (33) with at least one first switching element (37) configured to prevent a main current (I_{M}) from flowing between a first power source (11) and a first power drain (21) in a passive state (P) of the first switching element (37), and to allow the main current (I_{M}) to flow between the first power source (11) and the first power drain (21) in an active state (O) of the first switching element (37);
a first bypass module (36) for bypassing the first switching module (33) by being configured to allow a bypass current (I_{B}) to flow from the first power source (11) to the first power drain (21);
a measurement module (51) configured for measuring bypass currents (I_{B}) exceeding a certainty threshold (C) with a pre-defined measurement certainty; and
a control module (52) configured to switch the first switching module (33) from the passive state (P) to the active state (O) when the bypass current (I_{B}) exceeds a predefined switching threshold (S);
wherein the switching threshold (S) exceeds the certainty threshold (C) by a safety margin (M).

2. Protective switch assembly (30) according to claim 1, wherein the at least one first switching element (37) is configured to allow the main current (I_{M}) to flow from the first power source (11) to the first power drain (21) in the passive state (P).

3. Protective switch assembly (30) according to claim 1 or 2, wherein the at least one first switching element (37) comprises at least one field-effect transistor (40) having a source terminal (41) connected to the first power source (11) and a drain terminal (42) connected to the first power drain (21).

4. Protective switch assembly (30) according to claim 3, wherein the at least one field-effect transistor (40) has a gate terminal (43) connected to the control module (52), and wherein the control module (52) is configured to apply a gate voltage to the gate terminal (43) for controlling whether the at least one first switching element (37) is in the active state (O) or in the passive state (P).

5. Protective switch assembly (30) according to at least one of claims 1 to 4, wherein the first bypass module (36) is configured to allow the bypass current (I_{B}) to flow from the first power source (11) to the first power drain (21).

6. Protective switch assembly (30) according to at least one of claims 1 to 5, wherein the first bypass module (36) comprises a directionally selective element (39) allowing the bypass current (I_{B}) to flow from the first power source (11) to the first power drain (21) and preventing the bypass current (I_{B}) to flow from the first power drain (21) to the first power source (11).

7. Protective switch assembly (30) according to claim 6, wherein the directionally selective element (39) comprises at least one diode allowing the bypass current (I_{B}) to flow as a forward current from the first power source (11) to the first power drain (21) and preventing the bypass current (I_{B}) to flow as a reverse current from the first power drain (21) to the first power source (11).

8. Protective switch assembly (30) according to at least one of claims 1 to 7, further comprising
a second switching module (34) with at least one second switching element (38) configured to prevent a main current (I_{M}) from flowing between a second power source (12) and a second power drain (22) in a passive state (P) of the second switching element (38), and to allow the main current (I_{M}) to flow between the second power source (12) and the second power drain (22) in an active state (O) of the at least one second switching element (38); and
a second bypass module (36) for bypassing the second switching module (34) by being configured to allow a bypass current (I_{B}) to flow from the second power source (12) to the second power drain (22);
wherein the control module (52) is configured to switch the second switching module (34) from the passive state (P) to the active state (O) when the bypass current (I_{B}) exceeds the predefined switching threshold (S).

9. Protective switch assembly (30) according to claim 8,
wherein the first switching module (33) and/or the second switching module (34) are or is, respectively, configured to
prevent the main current (I_{M}) from flowing between the first power drain (21) and the second power drain in the passive state (P) of the at least one first switching element and/or the at least one second switching element (38), respectively, and/or
allow the main current (I_{M}) to flow between the first power drain (21) and the second power drain (22) in the active state (O) of the at least one first switching element (37) and/or the at least one second switching element (38), respectively.

10. Protective switch assembly (30) according to claim 8 or 9,
wherein the first bypass module (35) is configured to prevent the bypass current (I_{B}) to flow from the first power drain (21) to the second power drain (22) and/or
wherein the second bypass module (36) is configured to prevent the bypass current (I_{B}) to flow from the second power drain (22) to the first power drain (21).

11. Protective switch assembly (30) according to at least one of claims 1 to 10,
wherein the certainty threshold (C) and/or the safety margin (M) are or is, respectively, reflected by a certain percentage of a nominal current of the protective switch assembly (30).

12. Protective switching device (10) for a power supply system (1) providing electric power to an apparatus (2), in particular a vehicle, such as an aircraft, comprising at least one protective switch assembly (30) according to at least one of claims 1 to 11.

13. Power supply system (1) for electrically powering an apparatus (2), in particular a vehicle, such as an aircraft, comprising at least one protective switch assembly (30) according to claims 1 to 11 and/or at least one protective switching device (10) according to claim 12.

14. Power supply system (1) according to claim 13,
wherein at least one power source connected to the protective switch assembly (30) comprises a fuel cell and/or a battery, and/or
wherein at least one power drain connected to the protective switch assembly (30) comprises a propulsion system for propelling the apparatus (2).

15. An apparatus (2), in particular a vehicle, such as an aircraft, comprising a power supply system (1) according to claim 13 or 14.
